# EUROPEAN PATENT SPECIFICATION

(11) **EP 1 781 508 B1**
(45) Date of publication and mention of the grant of the patent: **23.09.2009**
(21) Application number: 05779594.0
(22) Date of filing: 01.08.2005
(51) Int. Cl.: B60R 21/16

(54) **CURTAIN AIRBAG MODULE**
VORHANGAIRBAGMODUL
MODULE DE COUSSIN GONFLABLE DE TYPE RIDEAU

(30) Priority: 25.08.2004 US 604418 P; 12.07.2005 US 179879
(43) Date of publication of application: 09.05.2007
(73) Proprietor: KEY SAFETY SYSTEMS, INC., Sterling Heights, MI 48314 (US)
(72) Inventor: COON, Jeffery, S., Sterling Heights, MI 48312 (US); JU, Chang-Hwan, Rochester, MI 48307 (US); PADIYAR, Prabhakar, Sterling Heights, MI 48312 (US); MONIACI, Kenneth, D., Royal Oak, MI 48073 (US)
(74) Representative: Gislon, Gabriele
(86) International application number: PCT/US2005/026973
(87) International publication number: WO 2006/026003

(56) References cited:
- DE-A1- 19 939 618
- GB-A- 2 393 692
- US-A1- 2003 057 683
- US-A1- 2003 057 683
- US-A1- 2004 104 561
- US-B1- 6 170 860
- US-B1- 6 279 941
- US-B1- 6 431 587
- US-B1- 6 435 543
- US-B1- 6 435 543

## Description

The present invention relates to a curtain airbag installed along the roof rail of a vehicle.
US 6435543 concerns an apparatus for helping to protect an occupant of a vehicle and, in particular, an inflatable vehicle occupant protection device. The device includes overlying panels interconnected to form a perimeter and defining an inflatable volume. A plurality of points of connection and line connections are arranged within the inflatable volume to interconnect the overlying panels and to define inflatable chambers. Points of connection interconnect the overlying panels to define inflatable chambers. Inflatable chambers comprises at least one arc-shaped chamber that, in the inflated condition, is arranged adjacent to the body part of the vehicle occupant. A housing on the vehicle pillar is provided for a part of the folded air bag.
US 2003/0057683 discloses a curtain air bag wherein the folded air bag is housed in a breakable trim in correspondence to the vehicle pillar.

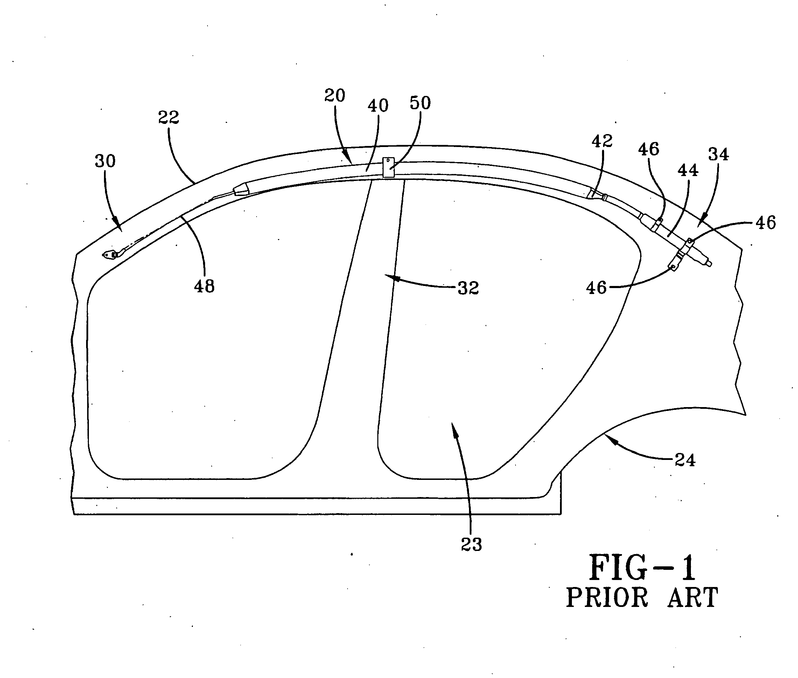

Figure 1 shows a prior art curtain airbag module 20 installed along the roof rail 22 of a passenger compartment 23 of a vehicle 24. In typical curtain airbag installations the airbag extends from the A-pillar 30 across the B-pillar 32 to the C-pillar 34 of the vehicle. Generally, the airbag module 20 has a rectangular or oblong airbag 40 folded or rolled into a cylindrical configuration. In this configuration, the airbag is slid into a housing that can take many shapes. One such housing is a long cylindrical, perforated or breakable covering or sleeve that keeps the airbag in a folded or rolled condition.

The airbag will generally include an inlet 42 in communication with an inflator 44. The inflator may be directly connected to the inlet or inserted within a housing for an indirect connection. In other installations the inlet is an opening in an inflatable region of the airbag and the inflator is inserted directly therein. The inflator and/or housing are appropriately fastened, using one or more fasteners or brackets 46, to the appropriate vehicle structure. In Figure 1, the inflator is mounted in the C-pillar. However, the inflator 44 can be mounted proximate the B or A-pillars. As known in the art, the lower corners of the airbag are often secured to adjacent corresponding pillars by a strap, which is often called a tether. One forward strap 48 is shown in Figure 1 in a stored configuration along the A-pillar. The various components shown in Figure 1 are covered by one or more trim pieces (not shown) hiding them in normal use. The airbag module is typically secured to the roof rail by a plurality of fasteners, which secure the inflator and the airbag. The module may also include a deflector or ramp 50 located proximate the B-pillar, which urges the airbag as it inflates to move away from the B-pillar.

The present invention provides an improved curtain airbag module, as set forth in Claim 1 and the depending claims.
Figure 1 shows a prior art curtain airbag module.
Figure 2 shows a curtain airbag module according to the current invention.
Figure 2a shows the airbag in an inflated configuration.
Figure 3 shows the construction of the neck of the airbag.
Figure 4 shows the construction of the neck and neck reinforcement portion of the airbag.
Figure 5 is a cross-sectional view at section 5 - 5 of Figure 2.
Figures 6 and 7 show details of connecting or mounting tabs.
Figures 8, 9 and 10 respectively are an isometric view, a side view and a front view of a B-pillar ramp or deflector.
Figure 11 is a cross-sectional view of the B-pillar ramp.
Figure 12 shows an anti-rotation member used with an airbag tab.
Figure 12a is an exploded view showing the anti-rotation member positioned apart from a slot in a tab located near a slot in the vehicle.

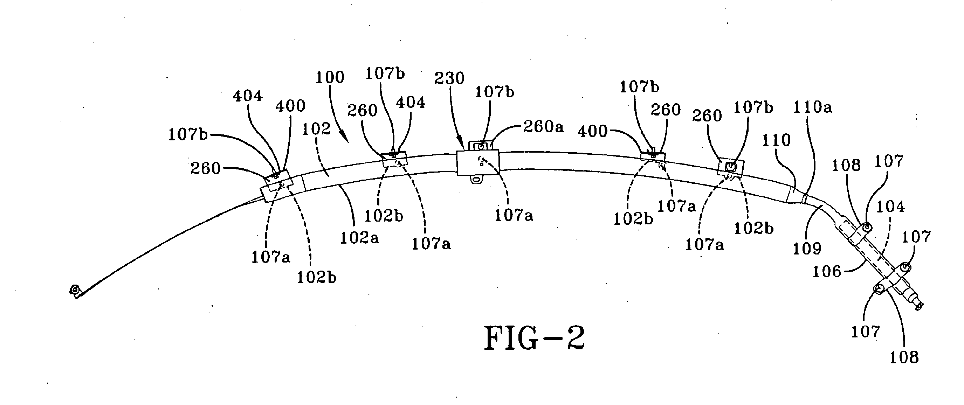

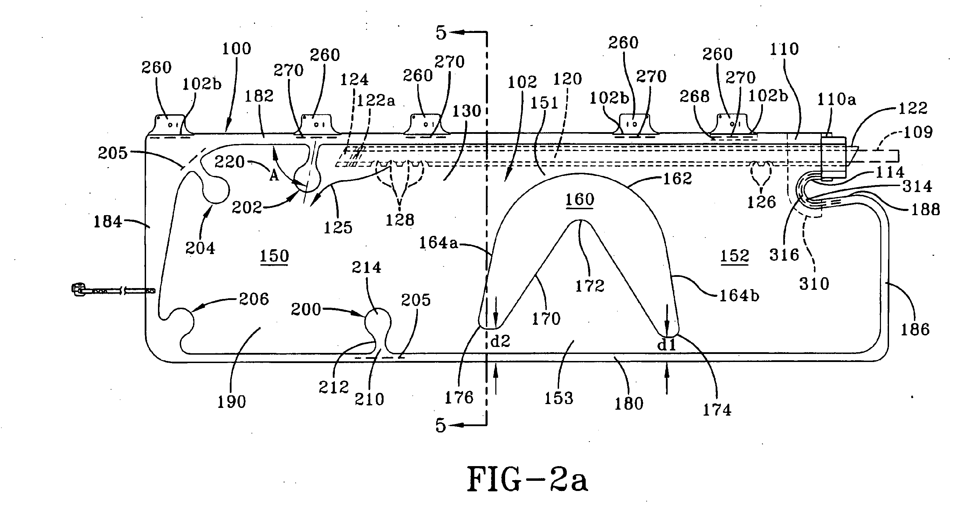

In Figure 2 an airbag module 100 according to the present invention comprises an airbag 102 (shown in a folded state). An inflator 104 is mounted within a hollow, tubular housing 106. The housing 106 is secured to the C-pillar 34 of a vehicle, for example by threaded fasteners 107 received through mating connectors or brackets 108 that are formed as part of the housing. The housing 106, or housing function, can be the brackets themselves or, for example, the housing can be a cylindrical tube configured to receive a cylindrical inflator. The airbag 102 is shown in Figure 2 in a stored configuration and in an inflated condition in Figure 2a. In the stored configuration the airbag is covered with a thin, long tearable covering 102a, which is generally known in the art. The covering 102a is configured to also hold another plurality of the fasteners 107a, such as plastic push pins received through like plurality of openings in the rear side of the covering as shown in Figure 2. The fasteners 107a extend rearward from the covering 102a. During installation of the module to the roof rail, the module is initially aligned with the roof rail and the fasteners 107a are pushed into openings in the roof rail thereby providing a first step in the mounting of the module. Subsequently, with the module 100 generally in place, the module is further secured to the roof rail by another set of fasteners 107b. The fasteners 107b extend through flaps 260 of the airbag 102 and an anti-rotation member 400.

The airbag 102 has a neck or neck portion 110 that can take many shapes and communicates with the inflator. In the illustrated embodiment, the neck or neck portion 110 is in operative communication with a connector tube 109 (see Figure 2) of the housing. The neck is connected directly about the inflator if a housing is not used.

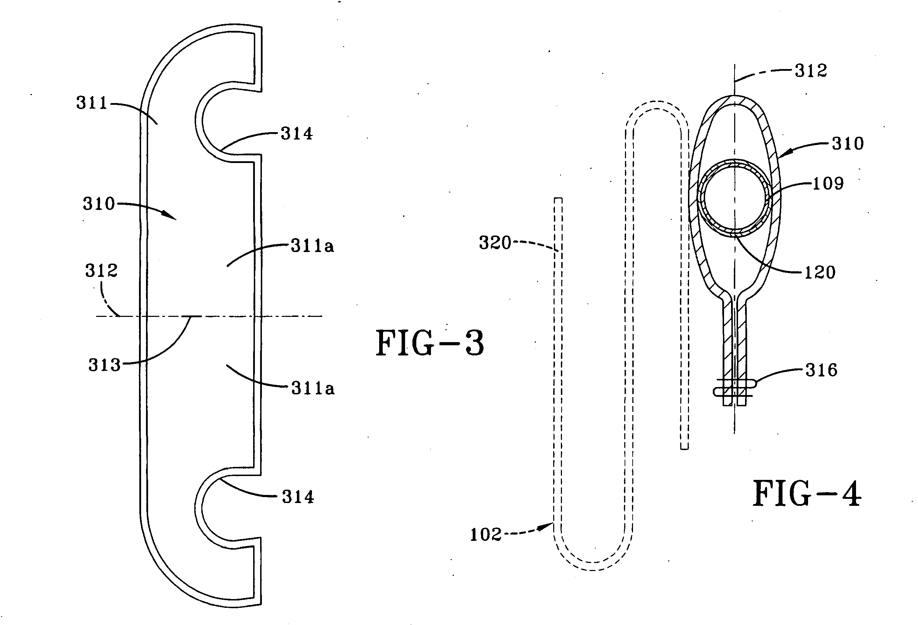

It is virtually impossible in this type of configuration to have the neck of the airbag lie flat, since the inflator 104 or connector tube 109 causes the neck to take a circular profile (in cross-section). The airbag 102 further includes, proximate the neck 110, a reinforcement panel 310 (see Figures 2a and 3) that is fitted about the exterior of the airbag to provide additional strength to the neck 110, as well as to provide an added fabric layer which protects the neck portion 110 from damage. The reinforcement panel 310 is shown in Figure 3 and includes an oblong body 311 with opposing halves 211 a located about a centerline 312. At least one slot 313 is formed along the centerline 312. The body includes opposing symmetrically positioned notches 314. The reinforcement panel 310 is folded over the centerline 312 to achieve the shape shown in Figure 2a.

The notches 314 are aligned with similarly shaped notches 114 formed in the neck 110. The reinforcement panel 310 is sewn to the airbag at a seam 316, which secures each panel half 311 a to opposite sides of the neck 110. The neck 110, reinforcement panel 310 (and a gas distribution tube 120 discussed below) are secured about the connector tube 109 by a circular hoop or ring-type fastener 110a as shown in Figures 2 and 2a. Figure 4 shows the neck 110 in cross-section and shows other portions 320 (in phantom line) of the airbag 102 folded and closely positioned to the neck in relative placement these other portions would take in the stored configuration of the airbag. The covering 102a is not shown. The reinforcement panel 310 prevents these portions. 320 of the airbag 102 from rubbing against the neck 110 as the airbag inflates.

The airbag 102 has a gas distribution tube 120. The gas distribution tube is inserted within the neck 110 and positioned adjacent the upper side of the airbag. The gas distribution tube 120 has an end 122 received within the neck and also positioned about the connector tube 109 and secured in a fluid-tight manner by the fastener 110a (see Figure 2a). The gas distribution tube 120 includes another end 124, which may be open or, as illustrated, closed such as by stitches or staples 122b. The gas distribution tube 120 further includes a plurality of openings 126 positioned proximate the neck and a further plurality of openings 128 positioned proximate end 124 in communication with a respective inflatable region 150, 152. In a preferred embodiment, the number of openings 126 is two, while the number of openings 128 is four. The reason for this construction is to distribute the inflatable gas into the airbag so the front and the rear of the curtain airbag fill uniformly and quickly at all operating temperatures.

The gas distribution tube 120 can be a solid, extruded metal tube or, alternatively, made from a dense, woven material. The above material choices are known in the art. The gas distribution tube 120 is received within the upper portion 130 of the airbag and can be held in place by a fastener such as a thin breakable wire or plastic strip or even a sewn stitch 122a, 122c that extends through the gas distribution tube 120 and the various panels of the airbag to hold end 124 in place, while not appreciably restricting the dimension of the opened diameter of the gas distribution tube 120.

The airbag further includes a forward or first inflatable region 150 and a rear inflatable region 152. The inflatable regions 150, 152 communicate with each other via open regions of the airbag that form passages 151, 153 linking the inflatable regions. The passages 151, 153 will also be inflated.

Positioned between inflatable regions 150, 152 is an optional non-inflatable region 160. The non-inflatable region includes an arcuately shaped upper surface 162, typically shaped as a segment of a circle and two tangentially extending straight portions 164a, 164b to avoid unnecessary stress risers forming as the airbag inflates. The lower portion of the non-inflatable region is triangularly shaped as designated by reference line 170 having two descending lobes. The center 172 of the lower triangular shape is arcuately shaped. The non-inflatable region includes first and second arcuately shaped ends 174, 176. Each of the ends is spaced a predetermined distance d1, d2 from the lower edge or seam 180 to reduce cushion stiffness of the inflatable region 150 of the airbag 102. As illustrated in this embodiment of the invention, the distance d1 between end 174 and the lower edge 180 of the airbag is smaller than the distance d2 between end 176 and edge 180 of the airbag to balance air flow to the region below region 160. The airbag includes an upper edge 182, as well as lateral edges 184, 186, which together define the periphery of the airbag. Edge 186 includes a concave portion 188 that defines the elongated shape of the neck 110.

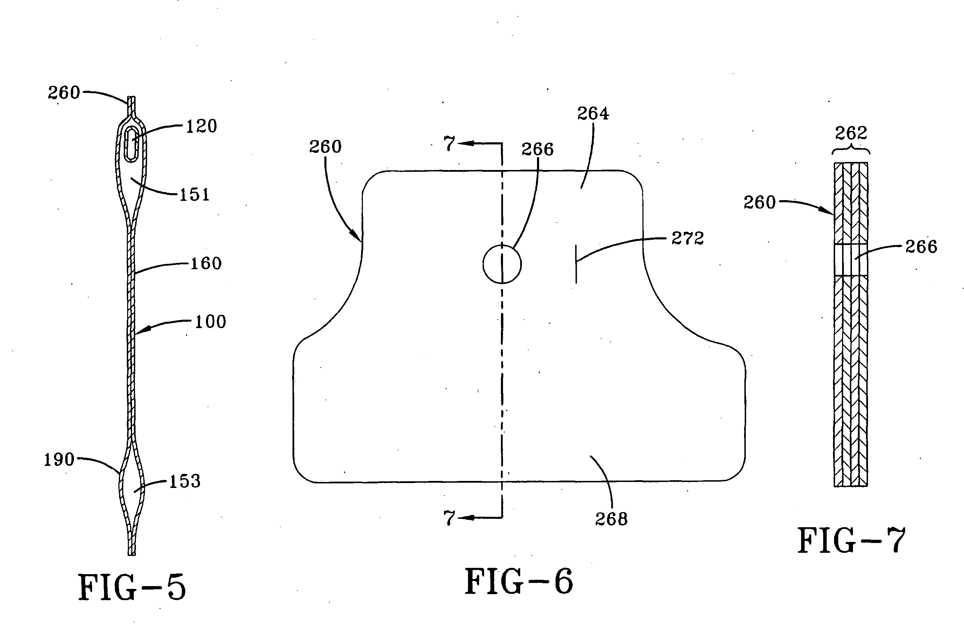

In general, the inflatable portions of the airbag are formed by a first and second, or inner 190 and outer 192 fabric or panel (or panel section). In Figure 2a, only the inner panel 190 is visible; the outer panel 192 is generally identical and shown in a number of the cross-sectional views, such as Figure 5, which is a cross-sectional view through section 5 - 5 of Figure 2a.

Certain regions of the inner and outer panels 190, 192 such as regions 200, 202, 204, 206 of the forward inflatable region 150 are configured to have the inner and outer panels touch or be coextensive, integral, or commonly connected (depending upon the technique used to form the airbag) and function as internal tethers. The commonly connected regions 200 - 206 each generally comprises a shoulder or base 210, a neck 212 and a head 214. The construction of regions 200, 204 is substantially similar, as the shoulder, neck and head are generally the same size and these regions are situated perpendicular to an imaginary line 205 extending through the periphery of the airbag proximate the regions 200, 204. Region 202 is substantially similar to regions 200, 204, that is, it also has a neck substantially narrower than its corresponding head 214. However, the region 202 is oriented at an oblique angle A relative to the local periphery of the airbag, which is designated by numeral 220. In the figures region 202 is the closest to the openings 128 in the gas distribution tube 120 and will be impacted by a relatively high velocity stream of inflation gas schematically shown by arrow 125. The angular orientation of region 202 reduces stress build-up in the adjacent portions of the airbag during airbag inflation.

The reason for introducing these interconnected regions 200, 202, 204, etc. in the airbag is they also serve to reduce the inflatable capacity of the airbag and selectively reduce the pressure generated within the material forming the airbag as it rapidly inflates. The region 206 is similar to the other regions 200 - 204 in that it includes a shoulder, neck and head portion; however, the width of the neck approximates that of the head. This design reduces cushion volume while at the same time providing adequate occupant head protection at the lower front portions of the inflated airbag.

The airbag includes a plurality of tabs 260, which are shown in greater detail in Figures 6 and 7. Each tab is formed by a plurality of layers 262 of material, typically four pieces or panels of woven fabric. The layers, pieces or panels of woven material are laid on top of one another and subsequently all of the layers are simultaneously laser cut. The laser cutting melts the periphery of each piece and in essence forms a peripheral weld 264 connecting each of the layers together as an integral. The resulting construction is a tab 260 having increased strength. A mounting opening 266 is formed within the tab by laser or die cutting. The lower edge 268 of the tab is sewn to the top portion 182 of the airbag by one or more lines of stitching 270. After the airbag 102 is fitted within the covering 102a, each tab 260 is pulled out of the covering through a slit 102b.

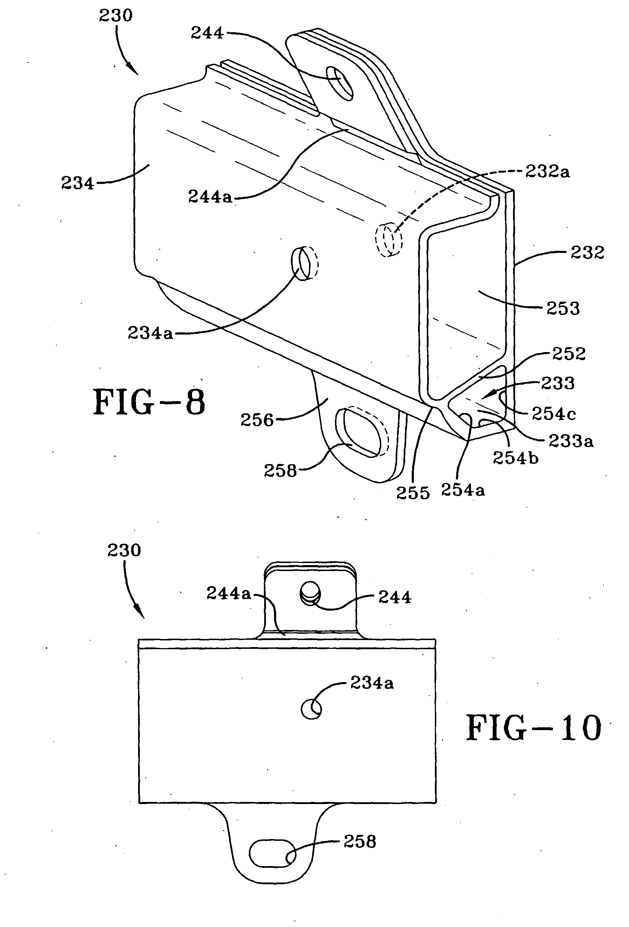

In Figure 1 a center portion of the prior art curtain extends across the B-pillar like in the present invention. Typically this B-pillar also supports an anchor point called a D-ring of a seat belt system (not shown). In addition, various plastic trim parts (not shown) are attached to the metal understructure forming the B-pillar. It is desirable to include within the airbag module a diversion mechanism. The diversion mechanism acts as a deflector or ramp to urge the airbag, as it inflates, to move away from any potential obstructions formed on or by the B-pillar such as the D-ring and trim parts. The present invention utilizes a new and improved holding and ramp mechanism illustrated in Figures 8-11.

Figures 8-11 illustrate the details of a B-pillar ramp or deflector 230 according to the present invention. The deflector 230 is generally U-shaped having flexible walls such as an outside wall 232 and inside wall 234. Each wall has openings 232a, 234a therein and a double or reinforced bottom 233 defined by two parallel walls. The deflector is typically made of an extruded plastic, which provides the deflector 230 with its desired flexibility. Each individual deflector 230 is stamped or cut from a longer extruded component or part. Side or outside wall 232 terminates in an end 235 having a fastening opening 236. Side or inside wall 234 is also mounted to the roof rail via a fastener 107a, which extends from the airbag covering 102a through an opening 234a. Side 234 includes a generally horizontally formed shoulder 240, which terminates in end 242 (facing end 235) having another mounting opening 244.

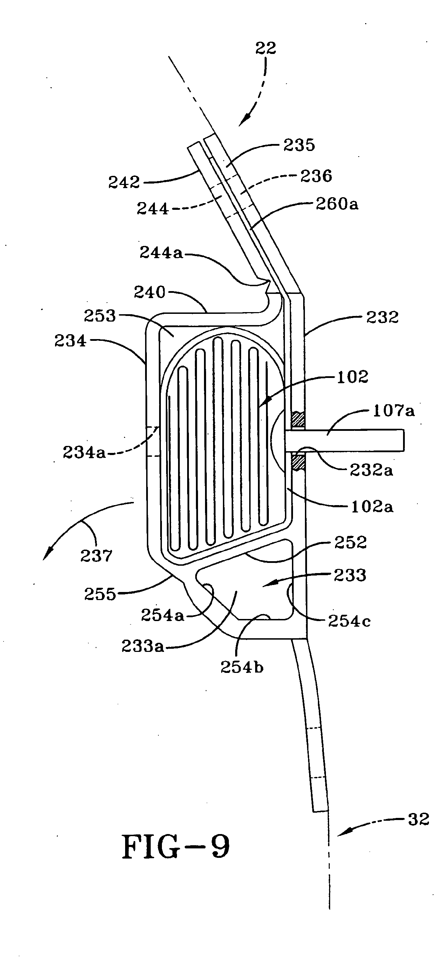

One tab 260 is placed between the ends 235, 242. Figures 2, 8 and 11 illustrate the deflector 230 in its mounted configuration with the ends 235, 242 registered to each. A mounting bolt 107b extends through the openings 234a, 236. In Figure 9 one of the tabs 260a of the airbag extends between the ends 235, 242, and the bolt 107b extends through the mounting openings in both ends and in the tab 260a. The deflector further includes a lower mounting arm 256, below the bottom 233, having an opening 258 therein. The lower mounting arm 256 is secured to the B-pillar (or lower portion of the roof rail) by insertion of another fastener (not shown) through opening 258.

The deflector includes the double bottom 233, which is formed as a tube 233a having a cross-section in the form of a four sided polygon, an upper side 252 of which forms a bottom surface and also, in combination with sides 232, 234, forms a cavity or chamber 253 for receipt of the airbag. The remaining sides 254a, b and c, in cooperation with upper side 252, form a tube 233a, which provides for increased stiffness in the part.

The above construction permits the lower portions of the deflector to stay intact during inflation of the airbag and provides an edge 255, forming a hinge (at the intersection of side 234 and upper side 252 of the bottom) for the side 234 of the deflector to rotate about after the tear seam breaks. The edge is located on an inboard side of the deflector and assists in directing the inflating airbag away from the B-pillar or B-pillar trim 32a.

As the bag opens it expands and moves the deflector wall 234 outwardly in the direction indicated by the arrow 237. The deflector 230 tears along a tear seam 244a. After the ramp 230 has rotated downwardly, it will be located between the B-pillar trim and the inflating airbag. The deflector 230 essentially operates as a ramp, urging or deflecting the inflating airbag away from obstructions on the B-pillar that might prevent the airbag from fully extending or which might slow the inflation of the airbag due to, for example, rubbing friction between the airbag and those obstructions. It should be noted that the folded airbag 102 enclosed within its cylindrical casing or covering 102a is also shown in Figure 9.

In the preferred embodiment, the airbag 102 is woven utilizing a Jacquard head and weaving process to integrally form the panels 190, 192 and the peripheral edge of the airbag, as well as the non-inflated region and the commonly connected regions. The airbag can alternatively be manufactured by overlaying two substantially identical pieces of fabric and sewing them together to form the periphery and neck region, the non-inflated region and the neck region 110, and the commonly connected regions 200 - 206. Alternatively, as known in the art, the airbag can be manufactured from one large piece of fabric folded about its middle and sewn together along most, if not all, of its common sides. In this construction, the folded over portion of the larger panel forms the lower edge of the airbag without the need to weave or sew separate panels together.

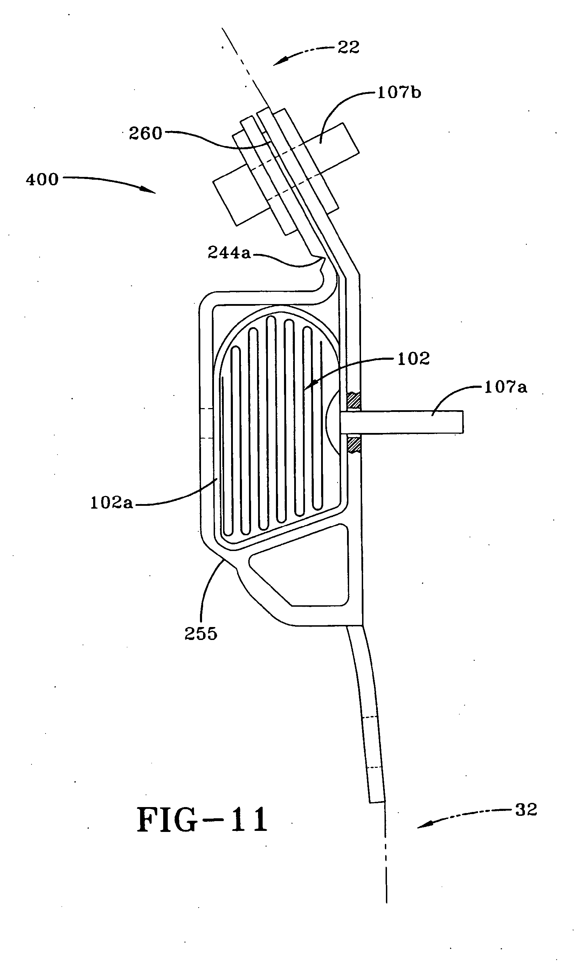

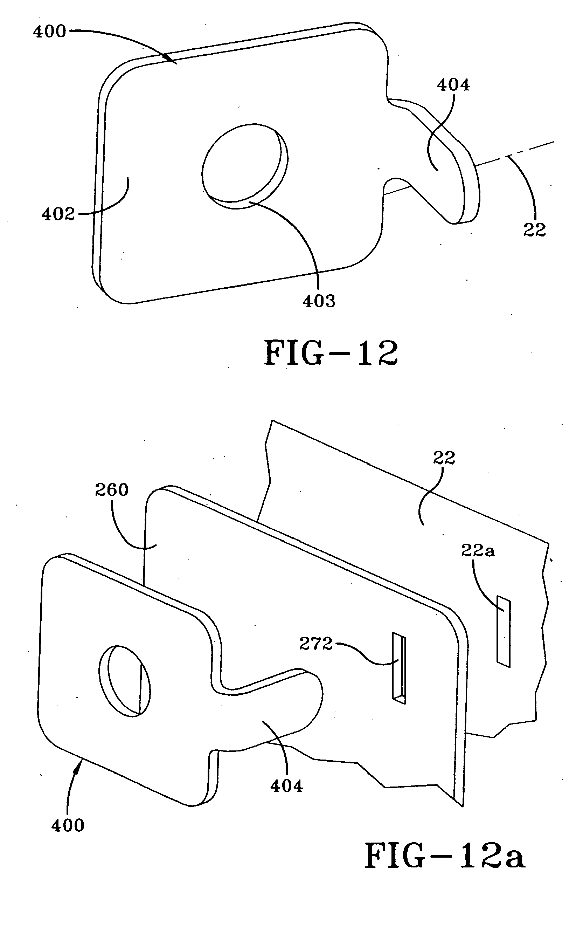

Each fastener 107b is received within an anti-rotation member 400 (shown in Figures 11 and 12) that assists in mounting each tab 260 flat against the roof rail and prevents each tab 260 from rotating. The anti-rotation member 400 includes a small plate 402 having an opening 403 therein for the fastener 107b. A projection or hook 404 is pushed into a receiving slot 22a formed along the roof rail 22 of the vehicle. Each hook extend through a slot 272 in a corresponding tab 260. Each member 400 is aligned with a respective tab 260 and the fastener 102b is inserted therethrough. The combination of the fastener 102b and hook 404 keeps each airbag tab 260 in place.

## Claims

1. A curtain airbag module (100) for a vehicle, the module comprising:
an airbag (102) having at least one inflatable region (150, 152); a gas distribution tube (120) located proximate the inflatable regions (150, 152) of the airbag (102), the gas distribution tube (120) having an end (122) adapted to receive inflation gas, the gas distribution tube (120) including at least one set of openings proximate each of the inflatable regions (150, 152) for providing inflation gas to the inflatable regions (150, 152), the airbag (102) having internal tethers (200, 202, 204, 206) with at least one of the internal tethers (200, 202, 204, 206) disposed at an oblique angle (A) with respect to the gas distribution tube (120), a neck portion (110) of the airbag (102) configured to communicate with an inflator. (104) via a connector tube (109), when the airbag is in a folded condition the airbag module is mounted to the vehicle proximate a roof rail of a the vehicle and above a vehicle pillar (32) that supports an anchor point of a seat belt system;
**characterized by** a deflector (230) that envelops that portion of the airbag proximate the vehicle pillar (32), the deflector (230) having first (234) and second (232) side walls, the first side wall (234) being rotatable from a first position wherein the first and second side wall (234, 232) define a space that contains the folded airbag to a second position wherein the side walls (234, 232) are separated from one another with the first side wall (234) being a ramp to guide the motion of the airbag as the airbag is inflated, the first side wall (234) includes a tear seam (244a) located above hinge (255) about which the first side wall (234) rotates when the tear seam (244a) is broken by the inflating airbag to direct the inflating airbag away from the vehicle pillar (32).

2. A curtain airbag module (100) as defined in Claim 1 further including a reinforcement panel (310) disposed about the neck portion (110) of the airbag (102).

3. A curtain airbag module (100) as defined in Claim 1 or 2 including a non-inflatable region (160) located between the inflatable regions (150, 152), the non-inflatable region (160) being located remote from an lower and upper edges (180, 182) of the airbag (102).

4. A curtain airbag module (100) as defined in Claim 3 wherein the non-inflatable region (160) includes two descending lobes and wherein a lower end (174, 176) of each descending lobe is asymmetrically located relative to the lower edge and to each other.

5. A curtain airbag module (100) as defined in Claim 3 including upper and lower inflatable passages (151, 152) bounding the non-inflatable region (160) and connecting the inflatable regions (150, 152) to one another.

6. A curtain airbag module (100) as defined in any of Claims 1 to 5 including a plurality of tabs (260) extending from the top of the airbag (102), each tab (260) being insertable through a corresponding opening in the reinforcement panel (310).

7. A curtain airbag module (100) as defined in Claim 6 including an anti-rotation member (400) having a bent side, extendable through a slit in a tab, the bent side extendable through an opening in the vehicle.

8. A curtain airbag module (100) as defined in Claim 7 wherein a mounting fastener extends through each tab (260) and anti-rotation member (400).

9. A curtain airbag module (100) as defined in any of Claims 1 to 8 wherein the deflector (230) is a plastic extrusion.

## Patentansprüche

1. Vorhang-Airbagmodul (100) für ein Fahrzeug, wobei das Modul Folgendes umfasst:
einen Airbag (102), der wenigstens einen aufblasbaren Bereich (150, 152) hat, eine Gasverteilungsröhre (120), die nahe den aufblasbaren Bereichen (150, 152) des Airbags (102) angeordnet ist, wobei die Gasverteilungsröhre (120) ein Ende (122) hat, das zum Aufnehmen von Aufblasgas eingerichtet ist, wobei die Gasverteilungsröhre (120) wenigstens einen Satz von Öffnungen nahe jedem der aufblasbaren Bereiche (150, 152) einschließt, um den aufblasbaren Bereichen (150, 152) Aufblasgas zuzuführen, wobei der Airbag (102) innere Halterungen (200, 202, 204, 206) hat, wobei wenigstens eine der inneren Halterungen (200, 202, 204, 206) in einem schiefen Winkel (A) in Bezug auf die Gasverteilungsröhre (120) angeordnet ist, wobei ein Halsabschnitt (110) des Airbags (102) dafür konfiguriert ist, über eine Verbindungsröhre (109) mit einer Aufblasvorrichtung (104) verbunden zu sein, wobei, wenn sich der Airbag in einem gefalteten Zustand befindet, das Airbagmodul nahe einer Dachschiene des Fahrzeugs und oberhalb einer Fahrzeugsäule (32), die einen Verankerungspunkt eines Sicherheitsgurtsystems trägt, an dem Fahrzeug angebracht ist,
**gekennzeichnet durch** eine Ablenkvorrichtung (230), die jenen Abschnitt des Airbags nahe der Fahrzeugsäule (32) umhüllt, wobei die Ablenkvorrichtung (230) eine erste (234) und eine zweite (232) Seitenwand hat, wobei die erste Seitenwand (234) gedreht werden kann von einer ersten Position, in der die erste und die zweite Seitenwand (234, 232) einen Raum definieren, der den gefalteten Airbag enthält, zu einer zweiten Position, in der die Seitenwände (234, 232) voneinander getrennt sind, wobei die erste Seitenwand (234) eine Rampe ist, um die Bewegung des Airbags zu leiten, wenn der Airbag aufgeblasen wird, wobei die erste Seitenwand (234) eine Reißnaht (244a) einschließt, die oberhalb eines Scharniers (255) angeordnet ist, um das sich die erste Seitenwand (234) dreht, wenn die Reißnaht (244a) **durch** den sich aufblasenden Airbag aufgerissen wird, um den sich aufblasenden Airbag weg von der Fahrzeugsäule (32) zu leiten.

2. Vorhang-Airbagmodul (100) nach Anspruch 1, der ferner eine Verstärkungsbahn (310) einschließt, die um den Halsabschnitt (110) des Airbags (102) angeordnet ist.

3. Vorhang-Airbagmodul (100) nach Anspruch 1 oder 2, der einen nicht aufblasbaren Bereich (160) einschließt, der zwischen den aufblasbaren Bereichen (150, 152) angeordnet ist, wobei der nicht aufblasbare Bereich (160) entfernt von einer unteren und einer oberen Kante (180, 182) des Airbags (102) angeordnet ist.

4. Vorhang-Airbagmodul (100) nach Anspruch 3, wobei der nicht aufblasbare Bereich (160) zwei absteigende Lappen einschließt und wobei ein unteres Ende (174, 176) jedes absteigenden Lappens asymmetrisch im Verhältnis zu der unteren Kante und zueinander angeordnet ist.

5. Vorhang-Airbagmodul (100) nach Anspruch 3, der einen oberen und einen unteren aufblasbaren Durchgang (151, 152) einschließt, die den nicht aufblasbaren Bereich (160) begrenzen und die aufblasbaren Bereiche (150, 152) miteinander verbinden.

6. Vorhang-Airbagmodul (100) nach einem der Ansprüche 1 bis 5, der mehrere Laschen (260) einschließt, die sich vom Oberteil des Airbags (102) aus erstrecken, wobei jede Lasche (260) durch eine entsprechende Öffnung in der Verstärkungsbahn (310) eingesteckt werden kann.

7. Vorhang-Airbagmodul (100) nach Anspruch 6, der ein Drehschutzelement (400) einschließt, das eine gebogene Seite hat, die sich durch einen Schlitz in einer Lasche erstrecken kann, wobei sich die gebogene Seite durch eine Öffnung in dem Fahrzeug erstrecken kann.

8. Vorhang-Airbagmodul (100) nach Anspruch 7, wobei sich ein Montagebefestigungselement durch jede Lasche (260) und das Drehschutzelement (400) erstreckt.

9. Vorhang-Airbagmodul (100) nach einem der Ansprüche 1 bis 8, wobei die Ablenkvorrichtung (230) ein Kunststoff-Extrusionsteil ist.

## Revendications

1. Module de coussin d'air du type rideau (100) pour un véhicule, le module comprenant:
un coussin d'air (102), comportant au moins une région gonflable (150, 152) ; un tube de distribution de gaz (120) agencé près des régions gonflables (150, 152) du coussin d'air (102), le tube de distribution de gaz (120) comportant une extrémité (122) adaptée pour recevoir le gaz de gonflement, le tube de distribution de gaz (120) englobant au moins un groupe d'ouvertures, agencées chacune près des régions gonflables (150, 152), pour fournir du gaz de gonflement aux régions gonflables (150, 152), le coussin d'air (102) comportant des attaches internes (200, 202, 204, 206), au moins une des attaches internes (200, 202, 204, 206) étant agencée à un angle oblique (A) par rapport au tube de distribution de gaz (120), une partie de col (110) du coussin d'air (102) étant configurée de sorte à communiquer avec un dispositif de gonflement (104) via un tube de raccordement (109), le module de coussin d'air étant, lorsque le coussin d'air se trouve dans un état plié, monté sur le véhicule près d'un rail de toit du véhicule et au-dessus d'un montant du véhicule (32) supportant un point d'ancrage d'un système de ceinture de siège ;
**caractérisé par** un déflecteur (230) enveloppant la partie du coussin d'air proche du montant du véhicule (32), le déflecteur (330) comportant des première (234) et deuxième (232) parois latérales, la première paroi latérale (234) pouvant être tournée d'une première position, dans laquelle les première et deuxième parois latérales (234, 232) définissent un espace contenant le coussin d'air plié, vers une deuxième position, dans laquelle les parois latérales (234, 232) sont séparées l'une de l'autre, la première paroi latérale (234) constituant une rampe pour guider le déplacement du coussin d'air lors du gonflement du coussin d'air, la première paroi latérale (234) englobant une couture de déchirure (244a) agencée au-dessus d'une charnière (255), autour de laquelle tourne la première paroi latérale (234) lorsque la couture de déchirure (244a) est déchirée par le coussin d'air en cours de gonflement, pour diriger le coussin d'air en cours de gonflement à l'écart du montant du véhicule (32).

2. Module de coussin d'air du type rideau (100) selon la revendication 1, englobant en outre un panneau de renforcement (310) agencé autour de la partie de col (110) du coussin d'air (102).

3. Module de coussin d'air du type rideau (100) selon les revendications 1 ou 2, englobant une région non gonflable (160), agencée entre les régions gonflables (150, 152), la région non gonflable (160) étant agencée en un emplacement éloigné des bords inférieur et supérieur (180, 182) du coussin d'air (102).

4. Module de coussin d'air du type rideau (100) selon la revendication 3, dans lequel la région non gonflable (160) englobe deux lobes descendants, une extrémité inférieure (174, 176) de chaque lobe descendant étant agencé de manière asymétrique au bord inférieur et aux autres lobes.

5. Module de coussin d'air du type rideau (100) selon la revendication 3, englobant des passages gonflables supérieur et inférieur (151, 152) délimitant la région non gonflable (160) et connectant les régions gonflables (150, 152) l'une à l'autre.

6. Module de coussin d'air du type rideau (100) selon l'une quelconque des revendications 1 à 5, englobant plusieurs pattes (260), s'étendant à partir de la partie supérieure du coussin d'air (102), chaque patte (260) pouvant être insérée à travers une ouverture correspondante dans le panneau de renforcement (310).

7. Module de coussin d'air du type rideau (100) selon la revendication 6, englobant un élément anti-rotation (400), comportant un côté fléchi, pouvant s'étendre à travers une fente dans une patte, le côté fléchi pouvant s'étendre à travers une ouverture dans le véhicule.

8. Module de coussin d'air du type rideau (100) selon la revendication 7, dans lequel un élément de fixation de montage s'étend à travers chaque patte (260) et à travers l'élément anti-rotation (400).

9. Module de coussin d'air du type rideau (100) selon l'une quelconque des revendications 1 à 8, dans lequel le déflecteur (230) est constitué par une extrusion plastique.
